# EUROPÄISCHE PATENTSCHRIFT

(11) **EP 2 773 521 B1**
(45) Veröffentlichungstag und Bekanntmachung des Hinweises auf die Patenterteilung: **30.11.2016**
(21) Anmeldenummer: 12783867.0
(22) Anmeldetag: 19.10.2012
(51) Int. Cl.: B60F 3/00, F41H 7/02

(54) **AMPHIBIENFAHRZEUG UND VERFAHREN ZUM BETRIEB EINES AMPHIBIENFAHRZEUGS**
AMPHIBIOUS VEHICLE AND METHOD FOR OPERATING AN AMPHIBIOUS VEHICLE
VÉHICULE AMPHIBIE ET PROCÉDÉ POUR OPÉRER UN VÉHICULE AMPHIBIE

(30) Priorität: 31.10.2011 DE 102011054949
(43) Veröffentlichungstag der Anmeldung: 10.09.2014
(73) Patentinhaber: Krauss-Maffei Wegmann GmbH & Co. KG, 80997 München (DE)
(72) Erfinder: BAUS, Rüdiger, 80997 München (DE); BACHMANN, Harald, 80997 München (DE)
(74) Vertreter: Feder Walter Ebert
(86) Internationale Anmeldenummer: PCT/DE2012/100326
(87) Internationale Veröffentlichungsnummer: WO 2013/064142

(56) Entgegenhaltungen:
- WO-A1-02/12005
- DE-A1- 3 740 073
- DE-B- 1 124 383
- GB-A- 1 345 829

## Beschreibung

Die Erfindung betrifft ein Amphibienfahrzeug, insbesondere ein militärisches Amphibienfahrzeug, nach dem Oberbegriff des Patentanspruchs 1. Einen weiteren Gegenstand der Erfindung bildet ein Verfahren zum Betrieb eines Amphibienfahrzeugs.

Bei Amphibienfahrzeugen, die sowohl auf dem Lande als auch zu Wasser fahren können, ergeben sich aufgrund der erforderlichen Schwimmfähigkeit des Amphibienfahrzeugs besondere Anforderungen. Insbesondere im Bereich militärischer Amphibienfahrzeuge, die aufgrund deren gegen beispielsweise ballistische Bedrohungen gepanzerten Designs ein ganz erhebliches Gewicht aufweisen, besteht das Problem, dass diese bei Wasserfahrt vergleichsweise tief eintauchen.

Der bei Wasserfahrt in Hauptfahrtrichtung nach vorn weisende Endbereich des Amphibienfahrzeugs wird daher herkömmlicherweise vergleichsweise hoch ausgeführt, damit dieser über die Wasserlinie hinaus nach oben aus dem Wasser ragt. Es ergibt sich daher eine vergleichsweise hohe Silhouette des Fahrzeugs in dessen Frontbereich. Für Landfahrten ist eine derartige Fahrzeugsilhouette jedoch eher ungünstig, da diese insbesondere im Bereich gepanzerter Militärfahrzeuge oftmals mit einer verschlechterten Bodensicht einhergeht.

Aus der DE 11 24 383 B, der GB 1 345 829 A, WO 02/12005 A1 und der DE 37 40 073 A1 sind Amphibienfahrzeuge bekannt, bei welchen sowohl eine Landfahrfront sowie ein Schiffsbug für Wasserfahrten vorgesehen ist. Die Hauptfahrtrichtung des Amphibienfahrzeugs wird dabei beim Übergang zwischen Land- und Wasserfahrt umgekehrt, so dass die jeweilige Front in Fahrtrichtung weist. Bei der DE 37 40 073 A1 ist zudem vorgesehen, dass die Fahrzeughöhe im Bereich des Schiffsbugs größer ist als die Fahrzeughöhe im Bereich der Landfahrfront.

Aufgabe der Erfindung ist es, ein Amphibienfahrzeug wie auch ein Verfahren zum Betrieb eines Amphibienfahrzeugs anzugeben, welches bei guten Sichtverhältnissen im Landfahrbetrieb auch für Wasserfahrten geeignet ist.

Bei einem Amphibienfahrzeug der eingangs genannten Art wird zur Lösung dieser Aufgabe vorgeschlagen, dass die Fahrzeughöhe über mindestens ein Schwallelement erhöht ist.

Auf diese Weise kann den unterschiedlichen Anforderungen für einerseits den Wasserbetrieb und andererseits den Landbetrieb auf einfache Weise Rechnung getragen werden. Der erste, als Landfahrfront ausgebildete Endbereich des Amphibienfahrzeugs weist in Hauptfahrtrichtung bei Landfahrt nach vorn und kann mit einer vergleichsweise niedrigen Silhouette ausgeführt werden, so dass sich keine Beeinträchtigung der Bodensicht ergibt. Der andere, als Schiffsbug ausgeführte Endbereich liegt bei Wasserfahrten in Richtung der Hauptwasserfahrtrichtung des Amphibienfahrzeugs vorn und kann vergleichsweise hoch ausgebildet werden, wodurch sich eine gute Schwimmfähigkeit ergibt. Beim Übergang zwischen Land- und Wasserfahrt wird das Fahrzeug gedreht, so dass dann der für die jeweilige Betriebsart optimierte Endbereich des Amphibienfahrzeugs in Fahrtrichtung weist, wodurch sich sowohl zu Lande als auch zu Wasser gute Fahreigenschaften erreichen lassen.

Erfindungsgemäß ist die Fahrzeughöhe im Bereich des Schiffsbugs größer als die Fahrzeughöhe im Bereich der Landfahrfront, so dass der Schiffsbug stets über die Wasserlinie hinausragt, selbst wenn der andere Endbereich bereits abgetaucht ist.

Eine beispielsweise im Falle größeren zu erwartenden Wellengangs oder im Falle durch Zuladung erhöhten Fahrzeuggewichts erfindungsgemäße Ausgestaltung sieht vor, dass die Fahrzeughöhe im Bereich des Schiffsbugs über mindestens ein Schwallelement erhöht ist. Durch Anordnung derartiger Schwallelemente im Bereich des Schiffsbugs lässt sich die Fahrzeughöhe bedarfsweise erhöhen.

In diesem Zusammenhang wird weiter vorgeschlagen, dass das Schwallelement im Bereich des Dachs eines Fahrzeuginnenraums angeordnet ist. Das Schwallelement kann mit dem Dach des Fahrzeuginnenraums lösbar, beispielsweise durch Verschrauben, oder unlösbar, beispielsweise durch Verschweißen, verbunden sein. Auch ist es denkbar, dass das Schwallelement permanent im Bereich des Dachs mitgeführt wird und bei Bedarf in eine die Fahrzeughöhe erhöhende Stellung verschwenkt wird.

Eine konstruktiv vorteilhafte Ausgestaltung sieht vor, dass das Schwallelement als Schwallblech ausgebildet ist. Das Schwallblech kann der Kontur des Schiffsbugs folgend diesen nach oben hin verlängern, wodurch sich ein insgesamt höherer Schiffsbug erreichen lässt.

Eine für die Landfahrt vorteilhafte Ausgestaltung sieht vor, dass die Landfahrfront zur Verbesserung der Bodensicht eine in Richtung der Fahrbahn geneigte Fläche aufweist. Entlang dieser nach unten geneigten Fläche kann aus dem Fahrzeuginneren ein Sichtweg beispielsweise über Winkelspiegel nach außen geführt sein, wodurch sich im Bereich der Landfahrfront gute Bodensichtverhältnisse ergeben.

Weiterhin wird vorgeschlagen, dass ein Landantrieb und ein in entgegengesetzter Richtung wirkender Wasserantrieb vorgesehen sind. Über die in entgegengesetzter Richtung wirkenden Antriebe kann das Amphibienfahrzeug entsprechend der jeweiligen Hauptfahrtrichtung während der Land- oder Wasserfahrt angetrieben werden. Beim Übergang zwischen Land- und Wasserfahrt kann zwischen den beiden Antrieben umgeschaltet werden, wobei es auch denkbar ist, vorrübergehend beide Antriebe gleichzeitig zu betreiben.

Vorteilhaft ist der Landantrieb im Bereich des Schiffsbugs und/ oder der Wasserantrieb im Bereich der Landfahrfront angeordnet, wodurch sich bei Landwie auch Wasserfahrt ein jeweils heckgetriebenes Antriebskonzept ergibt.

Eine in konstruktiver Hinsicht vorteilhafte Ausgestaltung sieht vor, dass der Landantrieb und der Wasserantrieb über den gleichen, insbesondere als Mittelmotor ausgebildeten Motor angetrieben werden. Der Landantrieb kann über ein Schalt-/ Lenkgetriebe bzw. Verzweigungsgetriebe an den Motor angeflanscht werden. Der Wasserantrieb kann ebenfalls über ein schaltbares Getriebe an dem Motor angeflanscht sein. Die Ausbildung des Motors als Mittelmotor bei gleichzeitigem Heckantrieb des Amphibienfahrzeugs über den Landantrieb erlaubt eine Fahrzeugkonstruktion, bei welcher im Bereich des Schiffsbugs eine Einstiegsöffnung für die Fahrzeugbesatzung vorgesehen ist.

Konstruktiv vorteilhaft ist ferner einer Ausgestaltung, bei welcher der Landantrieb und der Wasserantrieb auf gegenüberliegenden Seiten des Motors liegend mit diesem verbunden bzw. an diesen angeschlossen sind.

In Weiterbildung der Erfindung wird ferner vorgeschlagen, dass der Landantrieb und/ oder der Wasserantrieb über ein Getriebe an den Motor angeschlossen sind.

Darüber hinaus wird zur Lösung der vorstehend genannten Aufgabe bei einem Verfahren der eingangs genannten Art vorgeschlagen, dass die Fahrzeughöhe im Bereich des Schiffsbugs über mindestens ein Schwallelement erhöht wird.

Auf diese Weise kann den unterschiedlichen Anforderungen für einerseits den Wasserbetrieb und andererseits den Landbetrieb auf einfache Weise Rechnung getragen werden. Der erste, als Landfahrfront ausgebildete Endbereich des Amphibienfahrzeugs weist in Hauptfahrtrichtung bei Landfahrt nach vorn und kann mit einer vergleichsweise niedrigen Silhouette ausgeführt werden, so dass sich keine Beeinträchtigung der Bodensicht ergibt. Der andere, als Schiffsbug ausgeführte Endbereich liegt bei Wasserfahrten in Richtung der Hauptwasserfahrtrichtung des Amphibienfahrzeugs vorn und kann vergleichsweise hoch ausgebildet werden, wodurch sich eine gute Schwimmfähigkeit ergibt. Beim Übergang zwischen Land- und Wasserfahrt wird das Fahrzeug gedreht, so dass dann der für die jeweilige Betriebsart optimierte Endbereich des Amphibienfahrzeugs in Fahrtrichtung weist, wodurch sich sowohl zu Lande als auch zu Wasser gute Fahreigenschaften erreichen lassen.

In Weiterbildung des Verfahrens wird ferner vorgeschlagen, dass das Amphibienfahrzeug in der zuvor beschriebenen Weise ausgebildet ist.

Darüber hinaus wird vorgeschlagen, dass das Amphibienfahrzeug beim Übergang zwischen Land- und Wasserfahrt derart dreht, dass bei Landfahrt die Landfahrfront und bei Wasserfahrt der Schiffsbug in Richtung der Hauptfahrtrichtung ausgerichtet ist.

Ferner wird vorgeschlagen, dass beim Übergang zwischen Land- und Wasserfahrt zwischen dem Landantrieb und dem Wasserantrieb umgeschaltet wird. Auch kann es von Vorteil sein, beim Übergang zwischen Land- und Wasserfahrt vorübergehend beide Antriebe parallel zu betreiben.

Eine im Hinblick auf hohe Fahrgeschwindigkeiten bei Wasserfahrt vorteilhafte Ausgestaltung sieht schließlich vor, dass das Amphibienfahrzeug für Wasserfahrten mit mindestens einem weiteren Amphibienfahrzeug zu einem Schwimmverbund zusammengekoppelt wird.

Weitere Vorteile und Einzelheiten eines erfindungsgemäßen Amphibienfahrzeugs wie auch eines erfindungsgemäßen Verfahrens zum Betrieb eines Amphibienfahrzeugs werden nachfolgend unter Zuhilfenahme der beigefügten Zeichnungen eines Ausführungsbeispiels erläutert werden. Darin zeigen:
- Fig. 1:: ein Amphibienfahrzeug in perspektivischer Darstellung,
- Fig. 2:: eine weitere perspektivische Ansicht des Amphibienfahrzeugs aus Fig. 1,
- Fig. 3:: einen Vertikalschnitt durch das Amphibienfahrzeug gemäß der Darstellung in Fig. 1,
- Fig. 4:: einen Horizontalschnitt durch ein Amphibienfahrzeug gemäß der Darstellung in Fig. 1,
- Fig. 5:: in einer Draufsicht zwei Amphibienfahrzeuge während einer Wasserfahrt,
- Fig. 6:: die Amphibienfahrzeuge gemäß Fig. 5 in seitlicher Ansicht von der einen Seite her betrachtet, wobei der Bereich zwischen den Amphibienfahrzeugen zur Veranschaulichung einer Koppelstelle nur schematisch dargestellt ist,
- Fig. 7:: eine der Darstellung in Fig. 6 entsprechende Ansicht von der anderen Seite aus betrachtet und
- Fig. 8:: eine vergrößerte Ansicht einer Koppelstelle.

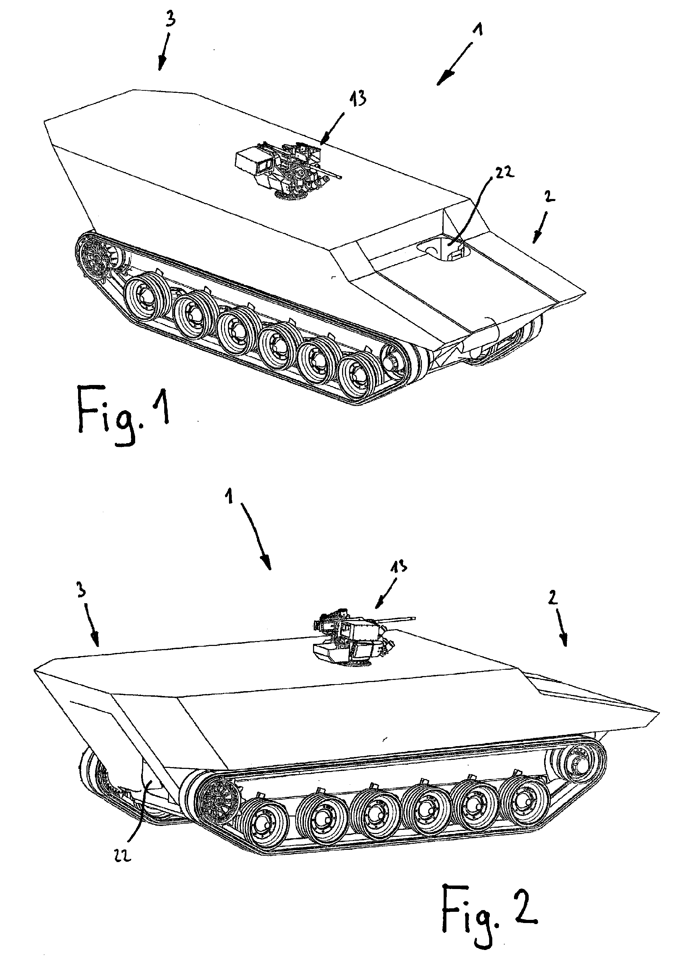

In den Fign. 1 und 2 ist in unterschiedlichen perspektivischen Ansichten ein Amphibienfahrzeug 1 dargestellt. Bei dem Amphibienfahrzeug 1 handelt es sich um ein kettengetriebenes Militärfahrzeug, welches gegen militärische Bedrohungen gepanzert ausgeführt ist und insoweit ein erhebliches Gesamtgewicht aufweist.

Das Amphibienfahrzeug 1 weist in Fahrzeuglängsrichtung betrachtet zwei einander gegenüberliegend angeordnete Endbereiche 2, 3 auf. Der eine Endbereich 2 ist als Landfahrfront ausgebildet. Im Falle von Landfahrten weist die Landfahrfront 2 in Richtung der Hauptfahrtrichtung des Amphibienfahrzeugs 1, das heißt jener Richtung, welche der Vorwärtsfahrt im Landfahrbetrieb entspricht. Der andere Endbereich 3 ist als Schiffsbug ausgebildet und weist im Falle von Wasserfahrten in Richtung der Hauptfahrtrichtung, also der Vorwärtsfahrt im Wasserbetrieb. Die Silhouette des Amphibienfahrzeugs 1 ist derart, dass sich ein hoher Schiffsbug 3 und eine niedrigere Landfahrfront 2 ergeben.

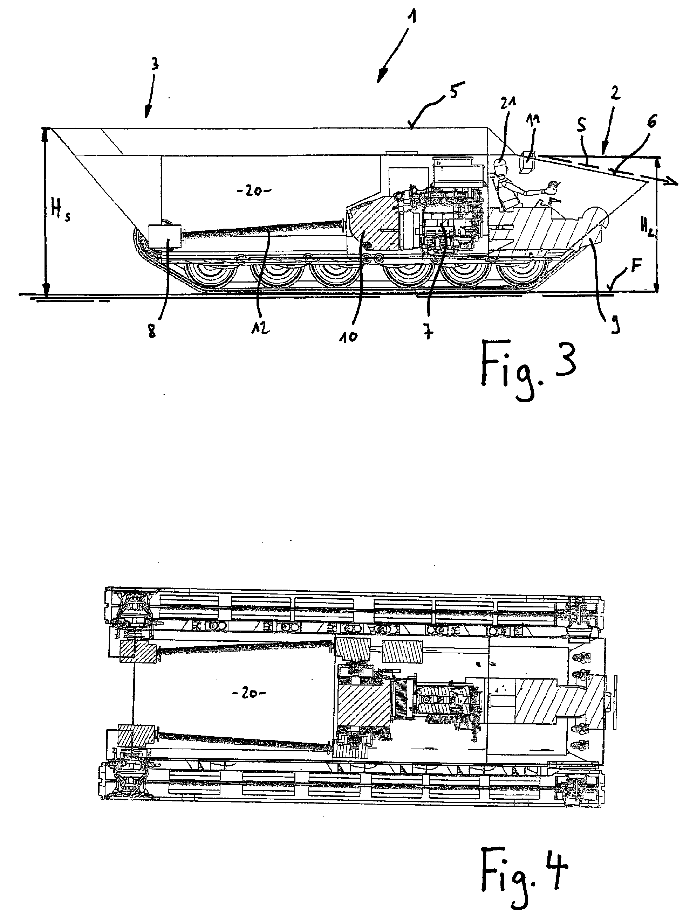

Wie die Darstellung in Fig. 3 erkennen lässt, weist der Schiffsbug 3 eine Höhe H_{S} auf, die größer ist als die Fahrzeughöhe H_{L} der Landfahrfront 2. Da der sich zur Fahrzeuglängsmittelebene hin verjüngend ausgebildete Schiffsbug 3 eine größere Höhe H_{S} aufweist, ragt dieser stets über die Wasserlinie hervor, selbst wenn der niedrigere Endbereich 2 bereits unterhalb der Wasserlinie abgetaucht ist.

Aufgrund der geringeren Höhe H_{L} der Landfahrfront 2 ergibt sich im Landfahrbetrieb eine verbesserte Bodensicht für den Fahrer 21 des Amphibienfahrzeugs 1, welcher die Fahrzeugumgebung aus dem geschützten Fahrzeuginneren über einen Winkelspiegel 11 beobachtet. Über den Winkelspiegel 11 wird ein Sichtweg S des Fahrers 21 entlang einer gegenüber der Fahrbahn F geneigten Fläche 6 der Landfahrfront 2 geführt, wodurch sich eine gute Bodensicht für den Fahrer 21 ergibt. Auch ist es möglich, dass der Fahrer 21 seine Sitzposition erhöht, so dass sein Kopf durch eine an der Landfahrfront 2 vorgesehene Luke 22 nach fahrzeugaußen ragt, wodurch sich besonders gute Sichtverhältnisse für den Fahrer 21 ergeben, vgl. auch Fig. 1. Dieser auch als "Überlukefahren" bezeichnete Betrieb eignet sich beispielsweise für Marschfahrten in gesichertem Gelände, da der Kopf des Fahrers aus dem geschützten Fahrzeuginneren nach außen ragt.

Im Falle von Wasserfahrten ändert sich die Hauptfahrtrichtung des Amphibienfahrzeugs 1, das heißt der Schiffsbug 3 liegt bei Wasserfahrt vorn in Richtung der Hauptfahrrichtung, wozu das Amphibienfahrzeug 1 beim Übergang zwischen Land- und Wasserfahrt gedreht wird.

Der Fahrer 21 kann bei Wasserfahrt seinen Sitz und mit diesem gegebenenfalls etwaige Bedienelemente drehen, so dass er in Richtung des Schiffsbugs 3 blickt. Dem Fahrer 21 kann für Wasserfahrten ein in Richtung der entsprechenden Hauptfahrrichtung weisender Sichtweg zur Verfügung gestellt wird, was über Sichtmittel elektronischer oder strahlenoptischer Art erreicht werden kann. Hierzu können beispielsweise Sichtmittel einer im Dachbereich des Amphibienfahrzeugs 1 vorgesehenen, nach Art einer fernbedienbaren Lafette ausgebildeten Waffenstation 13 genutzt werden. Die Waffenstation 13 bzw. die an dieser angeordneten Sichtmittel sind mit einem Abstand gegenüber dem Dach des Amphibienfahrzeugs 1 angeordnet und bilden insoweit eine Art hochgelegenen Ausblickpunkt. Bei Wasserfahrt kann die Waffenstation 13 in azimutaler Richtung entsprechend der Wasserfahrtrichtung des Amphibienfahrzeugs 3 in Richtung des Schiffsbugs 3 ausgerichtet werden und deren Sichtmittel für die Wasserfahrt genutzt werden.

Alternativ wäre es auch denkbar, dass der Fahrer 21 im Falle von Wasserfahrten eine von dem in Fig. 3 dargestellten Sitzplatz abweichenden Position innerhalb des Amphibienfahrzeugs 1 einnimmt und durch eine im Dachbereich des Amphibienfahrzeugs 1 vorgesehene Luke in Richtung des Schiffsbugs 3 blickt. Hierdurch würden sich für den Fahrer 21 besonders gute Sichtverhältnisse für die Wasserfahrt ergeben.

Für Wasser- wie auch Landfahrten ist jeweils ein gesonderter Landantrieb 8 bzw. Wasserantrieb 9 vorgesehen. Der Landantrieb 8 befindet sich im Bereich des Schiffsbugs 3 und wird gebildet von einem an der Kette des Amphibienfahrzeugs 1 eingreifenden Antriebselement. Über eine Verbindungswelle12 und ein Getriebe 10 ist der Landantrieb 8 an einen als Mittelmotor ausgebildeten Verbrennungsmotor 7 angeschlossen. Auf der gegenüberliegenden Seite des Motors 7 befindet sich im Bereich des Fahrers 21 der Wasserantrieb 9. Der Wasserantrieb 9 kann gebildet werden von einer oder mehreren Schiffschrauben oder einem teilweise auch als Jetantrieb bezeichneten Wasserstrahlantrieb. Der Wasserantrieb 9 ist ebenfalls über ein Getriebe an den Motor 7 angeflanscht. Die Anordnung des Motors 7, sowie des Getriebes 10 in der Mitte des Amphibienfahrzeugs 1 ist derart gewählt, dass sich eine für die Wasserfahrt günstige Schwerpunktlage des gesamten Amphibienfahrzeugs 1 ergibt.

Aufgrund der Ausbildung des Motors 7 als Mittelmotor ist es möglich, das beispielsweise der Aufnahme von Ausrüstungsgegenständen oder einer Besatzung dienende Fahrzeuginnere 20 über eine bei Landfahrt heckseitig angeordnete Luke 22 begehbar zu machen. Die Luke 22 ist im Bereich des Schiffsbugs 3 vorgesehen und als schwenkbare Ein-/ Ausstiegsluke ausgebildet.

Beim Übergang zwischen Land- und Wasserfahrt wird die Hauptfahrrichtung des Amphibienfahrzeugs 1 umgekehrt und zwischen dem Landantrieb 8 und dem Wasserantrieb 9 umgeschaltet. Während bei Landfahrt die Landfahrfront 2 die Front und der Schiffsbug 3 das Heck des Amphibienfahrzeugs 1 bildet, bildet der Schiffsbug 3 bei Wasserfahrt die Fahrzeugfront und die Landfahrfront 2 das Fahrzeugheck. Zudem ist es möglich, dass beim Übergang zwischen Land- und Wasserfahrt vorübergehend sowohl der Landantrieb 8 als auch der Wasserantrieb 9 parallel betrieben werden.

Das Amphibienfahrzeug 1 kann beim Übergang zwischen Land- und Wasserfahrt in Landfahrrichtung betrachtet vorwärts wie auch rückwärts in das Wasser gefahren werden. Auch das Anlanden des Amphibienfahrzeugs 1 beim Übergang zwischen Wasser- und Landfahrt kann in beiden Richtungen erfolgen.

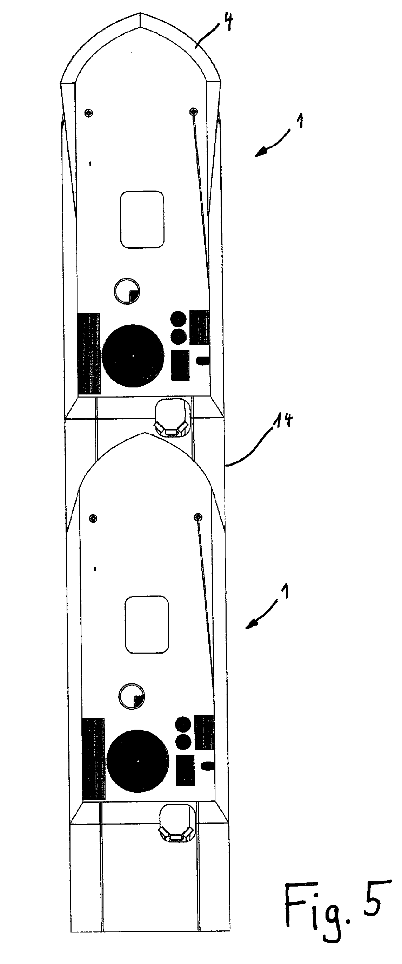

Die Darstellung in Fig. 5 zeigt zwei Amphibienfahrzeuge 1 bei Wasserfahrt in einer Draufsicht. Die Amphibienfahrzeuge 1 bilden einen Schwimmverbund, in dem beide Amphibienfahrzeuge 1 über eine biegesteife Koppelstelle 15 miteinander verbunden sind. Durch die Bildung des Schwimmverbunds lassen sich höhere Geschwindigkeiten im Falle von Wasserfahrten erreichen. Durch aneinanderkoppeln zweier Amphibienfahrzeuge 1 wird die Antriebsleistung des Schwimmverbunds gegenüber einem einzelnen Amphibienfahrzeug verdoppelt, wodurch sich eine um etwa 50 % gesteigerte Wasserfahrgeschwindigkeit erreichen lässt.

Hierzu ist vorgesehen, dass im Bereich zwischen den beiden Amphibienfahrzeugen 1 ein geschlossenes Strömungsprofil 14 erzeugt wird, wie dies insbesondere die Darstellung in Fig. 5 erkennen lässt. Es ergibt sich eine zu den Seiten des Schwimmverbunds hin glatte Fläche mit strömungsgünstigen Eigenschaften für den Wasserbetrieb.

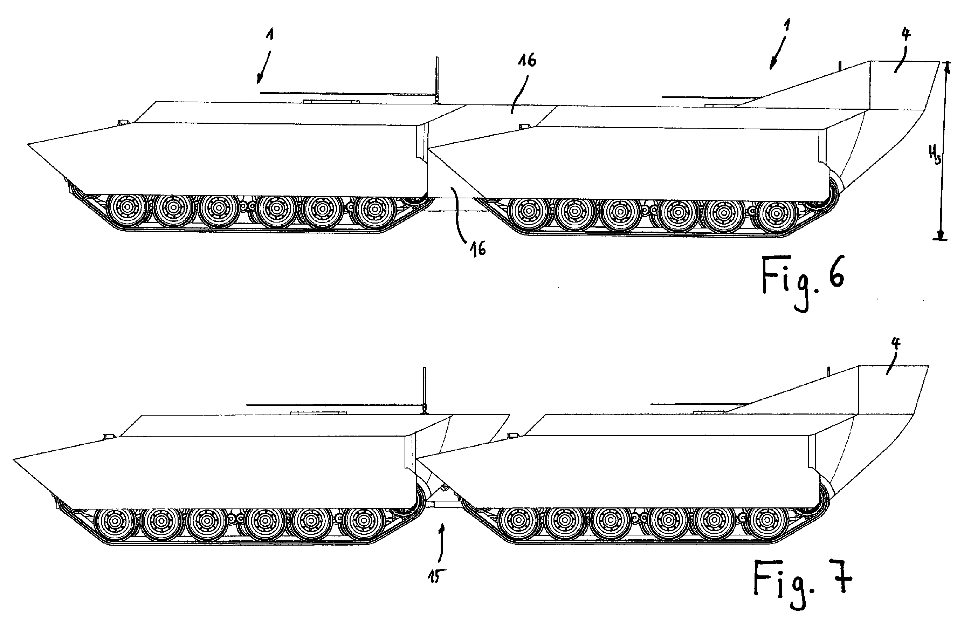

Im Bereich zwischen den Fahrzeugen 1 sind zur Bildung des geschlossenen Strömungsprofils 14 Adapterelemente 16 vorgesehen, wie diese insbesondere in Fig. 6 dargestellt sind. Die Adapterelemente 16 füllen die zwischen den Amphibienfahrzeugen 1 bestehenden Freiräume auf, so dass sich das geschlossene Strömungsprofil 14 ergibt. Der Vorteil eines geschlossenen Strömungsprofils 14 ist darin zu sehen, dass der Schwimmverbund aus den beiden Amphibienfahrzeugen 1 bei Wasserfahrt nur eine Bugwelle bildet, die nicht an irgendwelchen Freiräumen zwischen den beiden Amphibienfahrzeugen 1 bricht. Es ergibt sich nur eine durchgehende Welle und damit verbunden eine höhere Geschwindigkeit im Falle von Wasserfahrten.

Bei den Adapterelementen 16 kann es sich um fahrzeugmitgeführte Anbauteile handeln, die dann im Falle von Wasserfahrten mit wenigen Handgriffen im Bereich der Koppelstelle lösbar angebracht werden können. Um den Auftrieb des Schwimmverbundes zu verbessern, kann vorgesehen sein, dass die Adapterelemente 16 als Auftriebskörper ausgebildet sind. Auch sind Lösungen denkbar, bei welchem die Anbauteile als Klapp- oder Aufblaselemente an der Außenkontur der Amphibienfahrzeuge 1 mitgeführt und dann bei Bedarf in die in Fig. 6 dargestellte Position überführt werden können.

Wie die Darstellung in Fig. 6 bzw. Fig. 7 zudem erkennen lassen, ist es möglich, beispielsweise im Falle größerer Zuladungen oder im Falle größeren Wellengangs ein Amphibienfahrzeug 1 mit einem Schwallelement 4 zu versehen, welches die Höhe H_{S} des Schiffsbugs 3 noch weiter erhöht. Das Schwallelement 4 kann als Schwallblech ausgebildet lösbar oder unlösbar mit dem Dach des Amphibienfahrzeugs 1 verbunden sein. Im Falle eines aus mehreren Amphibienfahrzeugen 1 bestehenden Schwimmverbunds ist es ausreichend, wenn jeweils das in Fahrtrichtung vordere Amphibienfahrzeug 1 mit einem entsprechenden Schwallelement 4 versehen ist.

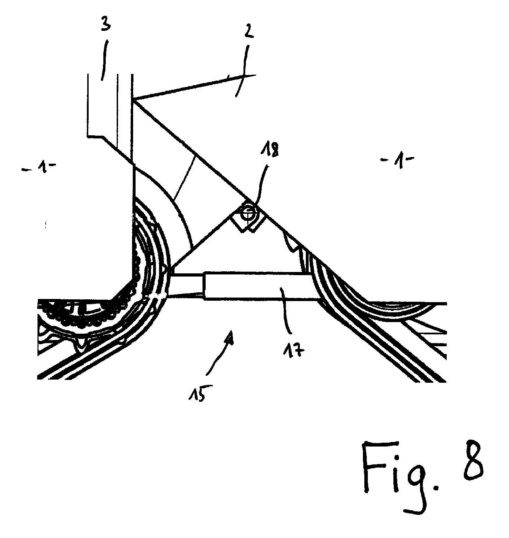

Wie die schematische, nicht alle Elemente darstellende Ansicht in Fig. 7 erkennen lässt, sind die beiden Amphibienfahrzeuge 1 zu Bildung des Schwimmverbunds über eine gelenkähnliche Koppelstelle 15 aneinander gekoppelt, auf deren Einzelheiten nachfolgend anhand der Darstellung in Fig. 8 eingegangen werden wird.

Im Bereich der Koppelstelle 15 sind die Endbereiche 2, 3 der beiden Amphibienfahrzeuge 1 über mindestens einen Hydraulikzylinder 17 sowie ein Koppelgelenk 18 miteinander verbunden. Vorteilhaft sind zwei Hydraulikzylinder 17 vorgesehen, die an den beiden Seiten des Schwimmverbunds angeordnet sein können. Bei den Hydraulikzylindern kann es sich um solche handeln, die durch ein Überdruckventil gesperrt sind, wodurch sich im Zusammenspiel mit dem Koppelgelenk 18 ein biegesteifer Schwimmverbund ergibt.

Durch das an den Hydraulikzylindern 17 vorgesehene Ventil können Relativbewegungen der beiden Amphibienfahrzeuge 1 beispielsweise während des Anlandens oder der Landfahrt realisiert werden, um die hohe Geländegängigkeit des Einzelfahrzeugs auch im Koppelverband zu nutzen und eine Überlastung der Koppelstelle 15 zu vermeiden.

Das vorstehend beschriebene Amphibienfahrzeug 1 sowie das zugehörige Verfahren zum Betrieb des Amphibienfahrzeugs 1 zeichnen sich dadurch aus, dass sich gute Fahreigenschaften für die Wasserfahrt bei zugleich guten Sichtverhältnissen im Landfahrbetrieb erreichen lassen. Zudem ist es möglich, durch Bildung eines Schwimmverbunds die Geschwindigkeit bei Wasserfahrt zu erhöhen.

### Bezugszeichen:

- 1: Amphibienfahrzeug
- 2: Endbereich, Landfront
- 3: Endbereich, Schiffsbug
- 4: Schwallelement
- 5: Dach
- 6: Fläche
- 7: Motor
- 8: Landantrieb
- 9: Wasserantrieb
- 10: Getriebe
- 11: Winkelspiegel
- 12: Welle
- 13: Waffenstation
- 14: Strömungsprofil
- 15: Koppelstelle
- 16: Adapterelement
- 17: Hydraulikzylinder
- 18: Koppelgelenk
- 20: Fahrzeuginnenraum
- 21: Fahrer
- 22: Luke

- F: Fahrbahn
- S: Sichtweg
- H_{S}: Höhe
- H_{L}: Höhe

## Patentansprüche

1. Amphibienfahrzeug, insbesondere militärisches Amphibienfahrzeug, mit einem ersten Endbereich (2) und einem in Fahrzeuglängsrichtung gegenüberliegenden zweiten Endbereich (3), wobei der erste Endbereich (2) als Landfahrfront und der zweite Endbereich (3) als Schiffsbug für Wasserfahrten ausgebildet ist, wobei die Fahrzeughöhe (Hs) im Bereich des Schiffsbugs (3) größer ist als die Fahrzeughöhe (H_{L}) im Bereich der Landfahrfront (2),
**dadurch gekennzeichnet,**
**dass** die Fahrzeughöhe (Hs) im Bereich des Schiffsbugs (3) über mindestens ein Schwallelement (4) erhöht ist.

2. Amphibienfahrzeug nach Anspruch 1, **dadurch gekennzeichnet, dass** das Schwallelement (4) im Bereich des Dachs (5) eines Fahrzeuginnenraums (20) angeordnet ist.

3. Amphibienfahrzeug nach einem der vorhergehenden Ansprüche, **dadurch gekennzeichnet, dass** das Schwallelement (4) als Schwallblech ausgebildet ist.

4. Amphibienfahrzug nach einem der vorhergehenden Ansprüche, **dadurch gekennzeichnet, dass** die Landfahrfront (2) zur Verbesserung der Bodensicht eine in Richtung der Fahrbahn geneigte Fläche (6) aufweist.

5. Amphibienfahrzeug nach einem der vorhergehenden Ansprüche, **dadurch gekennzeichnet, dass** ein Landantrieb (8) und ein in entgegengesetzter Richtung wirkender Wasserantrieb (9) vorgesehen sind.

6. Amphibienfahrzeug nach Anspruch 5, **dadurch gekennzeichnet, dass** der Landantrieb (8) im Bereich des Schiffsbugs (3) und/oder dass der Wasserantrieb (9) im Bereich der Landfahrfront (2) angeordnet ist.

7. Amphibienfahrzeug nach einem der Ansprüche 5 oder 6, **dadurch gekennzeichnet, dass** der Landantrieb (8) und der Wasserantrieb (9) über den gleichen, insbesondere als Mittelmotor ausgebildeten Motor (7) angetrieben werden.

8. Amphibienfahrzeug nach Anspruch 7, **dadurch gekennzeichnet, dass** der Landantrieb (8) und der Wasserantrieb (9) auf gegenüberliegenden Seiten des Motors (7) liegend mit diesem verbunden sind.

9. Amphibienfahrzeug nach Anspruch 7 oder Anspruch 8, **dadurch gekennzeichnet, dass** der Landantrieb (8) und/oder der Wasserantrieb (9) über ein Getriebe (10) an den Motor (7) angeschlossen ist.

10. Verfahren zum Betrieb eines Amphibienfahrzeug (1) nach dem Oberbegriff des Anspruchs 1, bei welchem die Hauptfahrtrichtung beim Übergang zwischen Land- und Wasserfahrt umgekehrt wird,
**dadurch gekennzeichnet,**
**dass** die Fahrzeughöhe (Hs) im Bereich des Schiffsbugs (3) über mindestens ein Schwallelement (4) erhöht wird.

11. Verfahren nach Anspruch 10, **dadurch gekennzeichnet, dass** das Amphibienfahrzeug (1) nach einem der Ansprüche 1 bis 9 ausgebildet ist.

12. Verfahren nach einem der Ansprüche 10 oder 11, **dadurch gekennzeichnet, dass** das Amphibienfahrzeug (1) beim Übergang zwischen Land- und Wasserfahrt derart dreht, dass bei Landfahrt die Landfahrfront (2) und bei Wasserfahrt der Schiffsbug (3) in Richtung der Hauptfahrrichtung ausgerichtet ist.

13. Verfahren nach einem der Ansprüche 10 bis 12, **dadurch gekennzeichnet, dass** das beim Übergang zwischen Land- und Wasserfahrt zwischen dem Landantrieb (8) und dem Wasserantrieb (9) umgeschaltet wird.

## Claims

1. Amphibious vehicle, in particular military amphibious vehicle, having a first end region (2) and an opposite second end region (3) in the vehicle longitudinal direction, the first end region (2) being constructed as a land travel front and the second end region (3) being constructed as a ship's bow for water travel, the vehicle height (H_{S}) in the region of the ship's bow (3) being greater than the vehicle height (H_{L}) in the region of the land travel front (2),
**characterized in that**
the vehicle height (H_{S}) in the region of the ship's bow (3) is increased by at least one surge element (4).

2. Amphibious vehicle according to Claim 1, **characterized in that** the surge element (4) is arranged in the area of the roof (5) of a vehicle interior (20).

3. Amphibious vehicle according to one of the preceding claims, **characterized in that** the surge element (4) is constructed as a baffle plate.

4. Amphibious vehicle according to one of the preceding claims, **characterized in that** the land travel front (2) has an area (6) inclined in the direction of the roadway in order to improve the ground visibility.

5. Amphibious vehicle according to one of the preceding claims, **characterized in that** a land drive (8) and a water drive (9) acting in the opposite direction are provided.

6. Amphibious vehicle according to Claim 5, **characterized in that** the land drive (8) is arranged in the area of the ship's bow (3) and/or **in that** the water drive (9) is arranged in the area of the land travel front (2).

7. Amphibious vehicle according to either of Claims 5 or 6, **characterized in that** the land drive (8) and the water drive (9) are driven via the same engine (7), in particular formed as a mid-engine.

8. Amphibious vehicle according to Claim 7, **characterized in that** the land drive (8) and the water drive (9) are connected to the engine (7), lying on opposite sides of the latter.

9. Amphibious vehicle according to Claim 7 or Claim 8, **characterized in that** the land drive (8) and/or the water drive (9) is connected to the engine (7) via a gearbox (10).

10. Method for operating an amphibious vehicle (1) according to the preamble of Claim 1, in which the main travel direction is reversed at the transition between land and water travel,
**characterized in that** the vehicle height (H_{S}) in the region of the ship's bow (3) is increased via at least one surge element (4).

11. Method according to Claim 10, **characterized in that** the amphibious vehicle (1) is constructed according to one of Claims 1 to 9.

12. Method according to either of Claims 10 or 11, **characterized in that** at the transition between land and water travel, the amphibious vehicle (1) rotates in such a way that during land travel the land travel front (2) and during water travel the ship's bow (3) is aligned in the direction of the main travel direction.

13. Method according to one of Claims 10 to 12, **characterized in that** at the transition between land and water travel, a changeover is made between the land drive (8) and the water drive (9).

## Revendications

1. Véhicule amphibie, en particulier véhicule amphibie militaire, avec une première région d'extrémité (2) et une deuxième région d'extrémité (3) opposée dans la direction longitudinale du véhicule, dans lequel la première région d'extrémité (2) est réalisée sous forme d'avant de progression terrestre et la deuxième région d'extrémité (3) est réalisée sous forme de proue de navire pour des trajets nautiques, dans lequel la hauteur du véhicule (H_{S}) dans la région de la proue de navire (3) est plus grande que la hauteur du véhicule (H_{L}) dans la région de l'avant de progression terrestre (2), **caractérisé en ce que** la hauteur du véhicule (H_{S}) dans la région de la proue de navire (3) est accrue au moyen d'au moins un élément d'étrave (4).

2. Véhicule amphibie selon la revendication 1, **caractérisé en ce que** l'élément d'étrave (4) est disposé dans la région du toit (5) d'un espace intérieur (20) du véhicule.

3. Véhicule amphibie selon l'une quelconque des revendications précédentes, **caractérisé en ce que** l'élément d'étrave (4) est constitué en tant que tôle d'étrave.

4. Véhicule amphibie selon l'une quelconque des revendications précédentes, **caractérisé en ce que** l'avant de progression terrestre (2) présente une face (6) inclinée en direction de la chaussée afin d'améliorer la vision du sol.

5. Véhicule amphibie selon l'une quelconque des revendications précédentes, **caractérisé en ce qu'**il est prévu un entraînement terrestre (8) et un entraînement nautique (9) opérant en direction opposée.

6. Véhicule amphibie selon la revendication 5, **caractérisé en ce que** l'entraînement terrestre (8) est disposé dans la région de la proue de navire (3) et/ou **en ce que** l'entraînement nautique (9) est disposé dans la région de l'avant de progression terrestre (2).

7. Véhicule amphibie selon l'une quelconque des revendications 5 ou 6, **caractérisé en ce que** l'entraînement terrestre (8) et l'entraînement nautique (9) sont entraînés par le même moteur (7), constitué en particulier en tant que moteur central.

8. Véhicule amphibie selon la revendication 7, **caractérisé en ce que** l'entraînement terrestre (8) et l'entraînement nautique (9) sont reliés au moteur (7) en étant disposés sur des côtés opposés de celui-ci.

9. Véhicule amphibie selon la revendication 7 ou la revendication 8, **caractérisé en ce que** l'entraînement terrestre (8) et/ou l'entraînement nautique (9) sont reliés au moteur (7) par une transmission (10).

10. Procédé d'utilisation d'un véhicule amphibie (1) selon le préambule de la revendication 1, dans lequel la direction de déplacement principale est inversée lors du passage entre la progression terrestre et la progression nautique, **caractérisé en ce que** l'on augmente la hauteur du véhicule (H_{S}) dans la région de la proue de navire (3) au moyen d'au moins un élément d'étrave (4).

11. Procédé selon la revendication 10, **caractérisé en ce que** le véhicule amphibie (1) est réalisé selon l'une quelconque des revendications 1 à 9.

12. Procédé selon l'une des revendications 10 ou 11, **caractérisé en ce que** le véhicule amphibie (1) tourne lors du passage de la progression terrestre à la progression nautique, de telle manière qu'en progression terrestre l'avant de progression terrestre (2) et en progression nautique la proue de navire (3) soit orienté(e) dans la direction de déplacement principale.

13. Procédé selon l'une quelconque des revendications 10 à 12, **caractérisé en ce que**, lors du passage entre la progression terrestre et la progression nautique, on commute entre l'entraînement terrestre (8) et l'entraînement nautique (9).
